# EUROPÄISCHE PATENTSCHRIFT

(11) **EP 3 586 012 B1**
(45) Veröffentlichungstag und Bekanntmachung des Hinweises auf die Patenterteilung: **31.08.2022**
(21) Anmeldenummer: 18707014.9
(22) Anmeldetag: 21.02.2018
(51) Int. Cl.: F16B 7/18, F16B 37/04

(54) **BEFESTIGUNGSVORRICHTUNG UND BEFESTIGUNGSBAUGRUPPE**
FASTENING DEVICE AND FASTENING ASSEMBLY
DISPOSITIF DE FIXATION ET MODULE DE FIXATION

(30) Priorität: 23.02.2017 DE 102017103768
(43) Veröffentlichungstag der Anmeldung: 01.01.2020
(73) Patentinhaber: MÜPRO Services GmbH, 65719 Hofheim am Taunus (DE)
(72) Erfinder: SCHEINBERGER, Marcus, 65719 Hofheim (DE); ROOS, Dominik, 65510 Idstein Wörsdorf (DE); ALT, Janosch, 65207 Wiesbaden (DE)
(74) Vertreter: Boult Wade Tennant LLP
(86) Internationale Anmeldenummer: PCT/EP2018/054297
(87) Internationale Veröffentlichungsnummer: WO 2018/153927

(56) Entgegenhaltungen:
- WO-A1-2016/188708
- DE-A1-102013 011 155
- US-A- 5 067 863

## Beschreibung

Die Erfindung betrifft eine Befestigungsvorrichtung zur Befestigung einer Last an einer Profilschiene, die einen im Wesentlichen C-förmigen Querschnitt und einen Längsschlitz, aufweist, wobei die Befestigungsvorrichtung eine Deckplatte zur Auflage auf der Profilschiene indem z.B. die Länge und/oder Breite der Deckplatte größer ist als die Breite des Längsschlitzes der Profilschiene, eine Gewindeplatte, die eine Gewindebohrung aufweist und eine Länge größer und eine Breite kleiner als die Breite des Längsschlitzes besitzt, und einen an der Deckplatte angeordneten Haltekäfig für die Gewindeplatte zum Einstecken in die Profilschiene aufweist, der eine sich durch den Haltekäfig erstreckende Aufnahme aufweist, in der die Gewindeplatte mit Abstand und parallel zur Deckplatte gehalten ist. Die Erfindung betrifft des Weiteren eine Befestigungsbaugruppe mit einer solchen Befestigungsvorrichtung und mit einer Profilschiene, die einen im Wesentlichen C-förmigen Querschnitt und einen Längsschlitz aufweist, wobei die Länge der Gewindeplatte größer ist als die Breite des Längsschlitzes und die Breite der Gewindeplatte kleiner ist als die Breite des Längsschlitzes.

Eine Befestigungsvorrichtung der eingangs genannten Art wird verwendet, um ein Anbauteil an einer Profilschiene zu befestigen, wie z.B. eine Rohrschelle oder eine Konsole. Im Haltekäfig kann eine Gewindeplatte fixiert werden, deren Ausdehnung in einer Querrichtung kleiner ist als die Breite des Längsschlitzes der Profilschiene und deren Ausdehnung in einer Längsrichtung senkrecht zur Querrichtung größer ist als die Breite des Längsschlitzes und kleiner ist als die Breite eines in Einsteckrichtung hinter den Schlitzflanken vorgesehenen Aufnahmeraums.

Zum Einsetzen der Befestigungsvorrichtung in die Profilschiene wird die Befestigungsvorrichtung mit der Gewindeplatte so ausgerichtet, dass die Längsrichtung der Gewindeplatte im Wesentlichen mit der Längsrichtung der Profilschiene übereinstimmt. Anschließend wird die Befestigungsvorrichtung mit der Gewindeplatte in den Längsschlitz in Einsteckrichtung eingeschoben, bis die Deckplatte an der Außenseite der Profilschiene aufliegt.

Nachfolgend kann die Befestigungsvorrichtung aus dieser Zwischenmontageposition um eine in Einsteckrichtung verlaufende Drehachse in eine Vormontageposition gedreht werden, in der die Längsrichtung der Gewindeplatte im Wesentlichen quer zur Längsrichtung der Profilschiene verläuft und die Gewindeplatte die Schlitzflanken hintergreift. In der Regel verklemmt sich die Befestigungsvorrichtung in der Vormontagestellung mit der Profilschiene, so dass sie zwar noch in der Profilschiene verschoben werden kann, aber gegen ein unbeabsichtigtes Verrutschen oder Herausfallen gesichert ist. Das Verklemmen findet an beliebiger Stelle zwischen Teilen der Befestigungsvorrichtung und der Profilschiene statt und ist aus dem Stand der Technik bekannt, so dass hier nicht näher darauf eingegangen wird.

Abschließend wird die Gewindeplatte mit dem Anziehen einer in die Gewindebohrung der Gewindeplatte eingreifende Schraube oder eines Gewindebolzens in die Endmontageposition von der Innenseite gegen die Unterseiten der Schlitzflanken gezogen, so dass die Schlitzflanken zwischen der Gewindeplatte und der Deckplatte und/oder dem Anbauteil geklemmt sind, wodurch das Anbauteil an der Profilschiene fixiert ist. Die Deckplatte kann als schwach dimensioniertes einzig der Aufgabe dienen, die Befestigungsvorrichtung vorläufig mit der Schiene zu verklemmen, sie kann aber auch als entsprechend stabil ausgeführtes Teil unmittelbar die Klemmkräfte im angezogenen Endzustand übertragen und dann z.B. zwischen der Profilschiene und dem Anbauteil liegen. Wenn die Deckplatte aus einem Kunststoff besteht, kann sie einstückig mit dem Haltekäfig ausgebildet sein. Die Deckplatte und der Haltekäfig können aber auch als zwei getrennt hergestellte Teile in geeigneter Weise aneinander befestigt sein, wobei sie auch aus unterschiedlichen Werkstoffen bestehen können.

Die Befestigungsvorrichtung ermöglicht es, die Gewindeplatte in die Profilschiene einzuführen und anschließend in die Vormontageposition zu drehen. Die Gewindeplatte muss hierzu sicher im Haltekäfig gehalten werden, so dass ein Verrutschen oder Herausfallen der Gewindeplatte aus dem Haltekäfig zuverlässig verhindert ist. Andererseits soll die Gewindeplatte einfach zu montieren oder auszutauschen sein.

In der EP 2 577 075 B1 und der DE 20 2009 016 565 U1 sind beispielsweise Schnellbefestiger gezeigt, die jeweils zwei Arme am an einem Verbindungselement zwischen Deckplatte und Gewindeplatte aufweisen, die sich in zwei seitlich in die der Gewindebohrung der Gewindeplatte eingearbeitete Schlitze erstrecken, um eine Gewindestange, die in die Bohrung eingedreht wird, nicht zu behindern. Die Arme weisen Rastelemente auf, die an der Gewindeplatte verrasten und so die Gewindeplatte am Schnellbefestiger fixieren. Zum Einbringen der Schlitze in die Gewindeplatte sind aber zusätzliche Arbeitsschritte erforderlich. Außerdem werden die Gewinde geschwächt, so dass die Maximallast vermindert wird, die mit der Befestigungsvorrichtung verankert werden kann.

Schnellbefestiger mit Haltekäfigen, die die Gewindplatte in einer Aufnahme halten, sind beispielsweise aus der DE 20 2005 010 186 U1 und der EP 1 775 482 A1 bekannt. Dort greifen Laschen bzw. Rippen in Ausnehmungen an den Flanken der Nut ein und sichern diese gegen ein Herausfallen. Auch hier ist ein Nachbearbeiten der Gewindeplatte für das Ausbilden der Ausnehmungen erforderlich. Die WO2016188708A1 zeigt ein weiteres Beispiel einer Befestigungsvorrichtung des Standes der Technik.

Aufgabe der Erfindung ist es, eine Befestigungsvorrichtung der eingangs genannten Art bereitzustellen, die bei einfacher Ausbildung und kostengünstiger Herstellung eine zuverlässige Sicherung der Gewindeplatte gegen Herausfallen ermöglicht. Aufgabe der Erfindung ist es des Weiteren, eine Befestigungsbaugruppe mit einer solchen Befestigungsvorrichtung und einer Profilschiene bereitzustellen.

Hauptmerkmale der Erfindung sind in den kennzeichnenden Teilen der Ansprüche 1 und 14 angegeben. Ausgestaltungen sind Gegenstand der Ansprüche 2 bis 13 sowie 15.

Zur Lösung der Aufgabe ist eine Befestigungsvorrichtung der eingangs genannten Art vorgesehen, bei welcher eine Halteeinrichtung für die Gewindeplatte vorgesehen ist, die mit einem freien Ende in die Gewindebohrung der Gewindeplatte innerhalb des Bohrungsdurchmessers eingreift und die Gewindeplatte in einer Einschubrichtung in der Aufnahme gegen Herausfallen sichert, wobei die Einschubrichtung im Wesentlichen in der Längsrichtung der Gewindeplatte verläuft.

Das freie Ende befindet sich in der ohnehin in der Gewindeplatte eingebrachten Gewindebohrung und verhindert so, dass die Gewindeplatte aus der Aufnahme heraus bewegt werden kann. Die Halteeinrichtung ist so ausgebildet, dass durch diese die Gewindeplatte sicher in der Befestigungsvorrichtung, insbesondere im Haltekäfig gehalten ist, um eine Gewindestange in die Gewindeplatte einzudrehen oder um die Gewindeplatte mit der Befestigungsvorrichtung in der Profilschiene zu positionieren.

Die Gewindebohrung weist außer dem Gewinde keine weiteren Vertiefungen auf, insbesondere keine Schlitze oder Aufnahmen für die Halteeinrichtung. Damit entfällt eine aufwändige Nachbearbeitung der Gewindeplatte und der Gewindequerschnitt wird nicht geschwächt, so dass die Befestigungsvorrichtung höher belastet werden kann. Das freie Ende der Halteeinrichtung kann am Innendurchmesser der Gewindebohrung selbst anliegen. derer beispielsweise dem Innendurchmesser des Gewindes, einer gestuften Bohrung mit größerem Durchmesser in Verlängerung der Gewindebohrung oder einer Einführschräge der Bohrung entspricht. Die Halteeinrichtung ist so ausgebildet, dass sie von der Gewindestange aus der Bohrung der Gewindeplatte heraus gedrängt werden kann, so dass die Halteeinrichtung den Eingriff der Gewindestange in die Gewindebohrung nicht behindert. Nach dem Eindrehen der Gewindestange in die Gewindeplatte ist die Gewindeplatte über die Gewindestange gehalten, so dass keine Fixierung über die Halteeinrichtung mehr erforderlich ist.

Vorzugsweise ist die Halteeinrichtung als eine Art Dorn ausgebildet, der in die Gewindebohrung eingreift. Der Dorn kann dabei ein- oder mehrteilig ausgebildet sein.

Die Halteeinrichtung liegt dabei vorzugsweise am Bohrungsdurchmesser im Bereich der Bohrung unmittelbar an der Gewindeplatte an, so dass diese spielfrei gehalten und zentriert sein kann, wodurch das Einführen der Gewindestange in die Bohrung vereinfacht ist

Besonders bevorzugt ist eine Ausführungsform, bei welcher die Halteeinrichtung oder der Dorn von der der Deckplatte abgewandten Seite her in die Gewindebohrung hineinragt.

Diese Maßnahme verhindert, dass sich die in der Bohrung befindlichen Teile der Halteeinrichtung nicht zwischen den Gewindegängen der Gewindebohrung und einem einzudrehenden Gewinde einer Schraube oder eines Gewindebolzens verklemmen können, weil sie von der Stirnfläche beim Eindrehen quasi aus der Bohrung herausgeschoben werden.

In einer besonders bevorzugten Ausgestaltung der Erfindung ist vorgesehen, dass sich der Umkreisdurchmesser der Halteeinrichtung oder des Dorns zum freien Ende hin verjüngt. Die Aufweitung kann zum Beispiel konisch, dachförmig oder kegelig erfolgen, so dass sich eine ringförmige Anlage am Rand der Bohrung ergibt. Wenn die Halteeinrichtung aus einfachen, geneigt in der Öffnung hineinragenden Laschen besteht, liegen diese dann punktuell am Rand der Bohrung an. Zum einen kann durch die geneigte Anordnung sichergestellt werden, dass die Halteeinrichtung am Bohrungsrand der Bohrung anliegt und dadurch die Gewindeplatte zentriert. Zum anderen kann die Halteeinrichtung ggf. auch Gewindeplatten mit unterschiedlichen Durchmessern der Bohrung halten. Die Halteeinrichtung ragt dabei jeweils so weit in die Bohrung hinein, bis die Halteeinrichtung am Bohrungsdurchmesser der Bohrung anliegt. Die Aufweitung kann auch stufenweise erfolgen, wobei der Durchmesser der Halteeinrichtung der einzelnen Stufen jeweils den genormten Durchmessern in Frage kommender Bohrungen entsprechen kann. Bei einer konstanten Aufweitung kann die Halteeinrichtung unabhängig vom Durchmesser der Bohrung am Bohrungsdurchmesser anliegen.

Für eine gute Zentrierung ist es vorteilhaft, wenn der Umkreisdurchmesser der Halteeinrichtung oder des Dorns an seiner größten Stelle größer als die Gewindebohrung ist. Dadurch wird sichergestellt, dass die Gewindeplatte mit dem Rand der Gewindebohrung immer auf dem Zentrierkonus bzw. der Zentrierschräge ruht.

Erfindungsgemäß ist die Halteeinrichtung oder der Dom elastisch nachgiebig an dem Haltekäfig angeordnet.

Ein Vorteil der federnd nachgiebigen Lagerung besteht darin, dass die Halteeinrichtung in Einsteckrichtung federnd nachgeben kann, so dass die Halteeinrichtung zum Einführen der Gewindeplatte aus der Flucht der Aufnahme gedrängt werden kann. Sobald die Gewindeplatte vollständig in die Aufnahme eingeschoben ist, schnappt die Halteeinrichtung dann in die Bohrung ein und sichert sie gegen Herausfallen.

Der Federweg der Halteeinrichtung in Einsteckrichtung so gewählt, dass diese soweit aus der Aufnahme gedrängt werden kann, dass die Gewindeplatte in die Aufnahme eingeschoben werden kann und anschließend wieder weit genug einfedern kann, um die Gewindeplatte zu halten bzw. zu fixieren.

Die Halteeinrichtung kann von der Gewindestange einfach aus der Bohrung herausgedrängt werden. Wird die Gewindestange wieder aus der Bohrung herausgedreht, kann das freie Ende wieder in die Bohrung einfedern, so dass auch bei einem Entfernen oder einem Tausch der Gewindestange die Fixierung der Gewindeplatte sichergestellt ist, sofern der Federweg ausreichend groß bemessen ist. Des Weiteren kann die Halteeinrichtung jeweils so weit in die Bohrung einfedern, dass die Halteeinrichtung auch bei unterschiedlichen Durchmessern der Bohrung am Bohrungsdurchmesser der jeweiligen Bohrung federnd anliegt. Darüber hinaus kann die federnde Lagerung auch dazu beitragen, dass die Halteeinrichtung auch bei ungleich hohen Gewindeplatten so in die Bohrung gedrängt wird, dass die Halteeinrichtung am Bohrungsdurchmesser der Bohrung anliegt.

Vorzugsweise weist die Halteeinrichtung oder der Dorn zumindest zwei in Umfangsrichtung, verteilt angeordnete Halteelemente auf, die in die Bohrung der Gewindeplatte ragen. Die Teilung der Halteeinrichtung in mehrere Halteelemente erleichtert das Aufweiten der Halteeinrichtung, so dass diese einfacher von der Gewindestange aus der Bohrung heraus gedrängt werden kann. Darüber hinaus können die Halteelemente einzeln federnd ausgebildet sein, so dass sich diese jeweils an den Bohrungsdurchmesser der Bohrung anlegen können.

Die Halteelemente können beispielsweise jeweils über Federlaschen am Haltekäfig festgelegtsein, um eine möglichst flexible Lagerung der Halteelemente bereitzustellen. Sie können dabei einstückig mit dem Haltekäfig ausgebildet sein.

Alternativ oder ergänzend können auch Sollbruchstellen oder Knickstellen vorgesehen sein, so dass die Halteeinrichtung durch die Gewindestange aus der Bohrung plastisch herausgebogen oder herausgebrochen werden kann.

Die Aufnahme kann in Einsteckrichtung durch einen Rahmen begrenzt sein, der sich in einer senkrecht zur Einsteckrichtung angeordneten Ebene erstreckt, wobei die Halteeinrichtung auf der Innenseite des Rahmens an diesem gelagert ist.

Die Halteeinrichtung kann am freien Ende eine bezüglich der Mittelachse radial aufweitbare Öffnung aufweisen. Die Halteeinrichtung kann beispielsweise durch die eingeführte Gewindestange so weit aufgeweitet werden, dass sich die Gewindestange durch die Öffnung erstreckt, wobei sie vorzugsweise aus der Bohrung verlagert wird.

Der Haltekäfig, die Deckplatte und die vorzugsweise mit dem Haltekäfig einstückig ausgebildete Halteeinrichtung sind vorzugsweise ein- oder mehrteilig aus Kunststoff gefertigt.

Die Befestigungsvorrichtung kann des Weiteren eine sich in Einsteckrichtung entlang der Drehachse durch die Befestigungsvorrichtung erstreckende Durchtrittsöffnung für eine Gewindestange oder eine Schraube aufweisen. Vorzugsweise liegt die Mittelachse dieser Durchtrittsöffnung auf der Drehachse, so dass eine Gewindestange, die in die Durchtrittsöffnung eingeschoben wird, relativ zur Bohrung zentriert wird und das Einführen der Gewindestange in die Bohrung vereinfacht ist.

Die Höhe der Aufnahme in dem Haltekäfig kann größer sein, als die Dicke der Gewindeplatte, wobei die wenigstens ein Federelement vorgesehen ist, das die Gewindeplatte gegen die Halteeinrichtung drängt. Die Aufnahme kann so unterschiedliche hohe Gewindeplatten aufnehmen. Zudem kann die Gewindeplatte in Einsteckrichtung verschoben werden, beispielsweise, um diese gegen die Schlitzflanken zu drängen. Die Halteeinrichtung kann dadurch auch starr am Haltekäfig angeordnet sein bzw. nur einen begrenzten Federweg haben. Vorzugsweise sind mehrere, in Umfangsrichtung um die Durchtrittsöffnung gleichmäßig verteilt angeordnete Federelemente vorgesehen, die ein Kippen der Gewindeplatte verhindern.

Insbesondere kann eine Gewindestange oder eine Schraube mit einem zum Innengewinde der Gewindeplatte korrespondierenden Außengewinde vorgesehen sein, die in das Innengewinde der Gewindeplatte eingedreht ist und über die Deckplatte hervorsteht. Mit Hilfe der Gewindestange wird die Gewindeplatte abschließend. gegen die Schlitzflanken der Profilschiene verspannt und so die Befestigungsvorrichtung bzw. ein an der Befestigungsvorrichtung gehaltenes Anbauteil an der Profilschiene fixiert. Die Gewindestange erstreckt sich beispielsweise durch das Anbauteil und ist an diesem mittels einer Kontermutter oder dergleichen abgestützt, so dass die Gewindestange das Anbauteil gegen die Gewindeplatte verspannen kann.

Zur Lösung der Aufgabe ist des Weiteren eine Befestigungsbaugruppe mit einer vorgehend beschriebenen Befestigungsvorrichtung und mit einer Profilschiene mit einem C-förmigen Querschnitt vorgesehen, wobei die Profilschiene einen Längsschlitz aufweist, der von zwei im Wesentlichen parallelen Schlitzflanken begrenzt ist. Die Befestigungsvorrichtung ist in einer ersten Orientierung, in der die Aufnahme in Längsrichtung der Profilschiene angeordnet ist, in Einsteckrichtung in eine Zwischenmontageposition den Längsschlitz einführbar, in der die Deckplatte an den Schlitzflanken aufliegt, unabhängig davon, ob sie als endgültiges Halteelement oder nur als vorläufiges Klemmelement dient. Die Befestigungsvorrichtung kann von der Zwischenmontageposition um eine in Einsteckrichtung verlaufende Drehachse in einer Montagerichtung in eine Vormontageposition gedreht werden, in der die Gewindeplatte die Schlitzflanken in Einsteckrichtung hintergreift. Die Befestigungsvorrichtung kann durch ein Drängen bzw. ein Spannen der Gewindeplatte entgegen der Einsteckrichtung von unten gegen die Schlitzflanken die Befestigungsvorrichtung von der Vormontageposition in eine Endmontageposition bewegt werden.

Um ein Überdrehen der Befestigungsvorrichtung über die Vormontageposition hinaus zu vermeiden, kann an der Deckplatte und/oder am Haltekäfig zumindest ein Drehanschlag vorgesehen sein, der in der Vormontageposition an der Profilschiene anliegt und ein Drehen in Montagerichtung über die Vormontageposition hinaus verhindert.

Optional kann die Deckplatte zwischen einer Vormontagestellung, in der die Breite der Deckplatte quer zur Einschubrichtung größer ist als die Breite des Längsschlitzes der Profilschiene und die Deckplatte auf den Schlitzflanken der Profilschiene aufliegen kann, und einer Endmontagestellung verformbar sein, in der die Breite der Deckplatte quer zur Einschubrichtung kleiner als die Breite des Längsschlitzes ist oder dieser entspricht. Wird die Gewindeplatte durch ein Spannelement gegen die Schlitzflanken gedrängt, wird die Deckplatte in die Endmontagestellung verformt. Dies kann dadurch erfolgen, dass die Deckplatte von einem Anbauteil oder einem Teil des Spannmittels in die Endmontagestellung, insbesondere zwischen den Schlitzflanken, gedrängt oder die Deckplatte auf andere Weise in den Längsschlitz gezogen wird, wobei die Schlitzflanken die Deckplatte in die Endmontagestellung drängen. In der Endmontagestellung liegt die Deckplatte nicht mehr zwischen dem Anbauteil und den Schlitzflanken, so dass das Anbauteil unmittelbar auf den Schlitzflanken aufliegt. Die Schlitzflanken sind also unmittelbar zwischen Anbauteil und Gewindeplatte geklemmt, wobei im Kraftfluss kein zusätzliches Bauteil vorhanden ist. Insbesondere befindet sich die Befestigungsvorrichtung nicht im Kraftfluss. Die Befestigungsvorrichtung kann somit leichter konstruiert werden, da diese lediglich während der Montage eine Halte- und Zentrierfunktion für die Gewindeplatte hat, aber sich in der Endmontageposition nicht im Kraftfluss befindet. Unerwünschte Setzeffekte, beispielsweise, wenn das Befestigungselement aus Kunststoff hergestellt wird, können so vermieden werden. Auch im Brandfall bleibt der unmittelbare Kontakt zwischen der Profilschiene und der Gewindeplatte sowie dem Anbauteil erhalten, die beide in aller Regel aus Metall ausgebildet sind. In der Vormontagestellung kann die Deckplatte dagegen nicht so verformt werden, dass diese zwischen den Schlitzflanken eintauchen kann, so dass eine zuverlässige Positionierung der Gewindeplatte durch Verklemmen der Befestigungsvorrichtung mit der Profilschiene gewährleistet ist.

Beispielsweise weist die Deckplatte eine Grundplatte auf, an der der Haltekäfig angeordnet ist, sowie zumindest eine Seitenplatte, die schwenkbar mit der Grundplatte verbunden ist, wobei die Breite der Grundplatte quer zur Einschubrichtung kleiner ist als die Breite des Längsschlitzes der Profilschiene. Die Schwenkachse ist vorzugsweise so angeordnet, dass diese in der Vormontageposition der Befestigungsvorrichtung parallel zur Längsrichtung des Längsschlitzes verläuft, wobei in der Vormontageposition die Seitenplatte auf der Profilschiene aufliegt und sich die Grundplatte in Einsteckrichtung über dem Längsschlitz befindet. Anstelle der als bewegliche Elemente ausgeführten Seitenplatten, die über definierte Schwenkachsen an der als feststehende Element ausgeführten Grundplatte, kann auch konstruktive eine gleichmäßige Durchbiegung der Deckplatte vorgesehen sein.

Vorzugsweise sind zwei an entgegengesetzten Rändern der Grundplatte angeordnete Seitenplatten vorgesehen, wobei die Schwenkachsen der Seitenplatten parallel zueinander angeordnet sind. Die Grundplatte kann eine hohe Eigenstabilität aufweisen, so dass eine quer auf den Schlitzflanken aufliegende Grundplatte nicht zwischen den Schlitzflanken eintauchen kann. Sobald die Deckplatte gedreht ist, um die Gewindeplatte in die Vormontageposition zu bewegen, in der die Gewindeplatte die Schlitzflanken hintergreift, liegt die Grundplatte nicht mehr auf den Schlitzflanken auf, sondern es liegen lediglich die Seitenplatten auf den Schlitzflanken auf. Durch Verschwenken der Seitenplatten kann die Deckplatte anschließend in die Endmontagestellung bewegt werden.

Die Grundplatte kann beispielsweise durch einen in einer senkrecht zur Einsteckrichtung verlaufenden Ebene angeordneten Rahmen gebildet sein. Alternativ kann die Grundplatte auch durch zwei in einer senkrecht zur Einsteckrichtung verlaufenden Ebene angeordnete, sich quer zur Einschubrichtung erstreckende Stege gebildet sein, die die Seitenplatten miteinander verbinden.

An der dem Haltekäfig entgegengesetzten Fläche der Deckplatte können entgegen der Einschubrichtung vorstehende Halte- oder Ausrichteelemente für ein Anbauteil vorgesehen sein, über die die Befestigungsvorrichtung gemeinsam mit dem Anbauteil gedreht werden kann oder durch die das Anbauteil relativ zur Befestigungsvorrichtung und somit zur Gewindeplatte ausgerichtet werden kann.

Um die Befestigungsvorrichtung im Längsschlitz zu zentrieren und zu fixieren, können zwischen der Deckplatte und der Aufnahme zwei bezüglich der Durchtrittsöffnung diametral gegenüberliegende Federanordnungen vorgesehen sein, wobei die Federanordnungen jeweils zwei sich vom Haltekäfig bezüglich der Durchtrittsöffnung nach außen weg gekrümmte Federlaschen mit radialem Federweg aufweisen. Die beiden Federlaschen einer Federanordnung stellen eine zuverlässige Zentrierung der Befestigungsvorrichtung sicher, da unabhängig von der Drehrichtung und der Position der Befestigungsvorrichtung stets eine Federlasche einer Federanordnung in Anlage mit den Schlitzflanken gelangt.

Die Federlaschen einer Federanordnung erstrecken sich bezüglich einer Umfangsrichtung um die Durchtrittsöffnung vorzugsweise in entgegengesetzte Richtungen, insbesondere aufeinander zu.

Die Federlaschen einer Federanordnung können sich in radialer Richtung bezüglich der Durchtrittsöffnung überlappen, so dass unabhängig von der Position gewährleistet ist, dass eine Federlasche an einer Schlitzflanke anliegt.

Die Federlaschen einer Federanordnung können zudem unterschiedliche Krümmung aufweisen.

Zumindest eine, in einer Drehrichtung der Befestigungsvorrichtung um eine parallel zur Einsteckrichtung angeordnete Drehachse, vordere Federlasche weist vorzugsweise ein radial einwärts umgebogenes freies Ende auf. Dadurch ist sichergestellt, dass die Federlasche beim Einführen bzw. Drehen der Befestigungsvorrichtung im Längsschlitz korrekt mit den Schlitzflanken in Anlage gelangt.

Um ein Überdrehen über die Vormontageposition hinaus zu verhindern, ist vorzugsweise an zumindest einer in Drehrichtung der Befestigungsvorrichtung um eine parallel zur Einsteckrichtung angeordnete Drehachse vordere Federlasche ein Drehanschlag vorgesehen.

Das Halteelement kann beispielsweise einen in Umfangsrichtung um die Durchtrittsöffnung umlaufenden, insbesondere ringförmigen, Rahmen aufweisen, an dem die Federlaschen gehalten sind.

Das Halteelement und die Deckplatte können mit Federlaschen in Einsteckrichtung federnd miteinander verbunden sein, wobei die Federelemente insbesondere Federlaschen sind. Bei dieser Ausführungsform ist es nicht erforderlich, dass die Gewindeplatte in der Aufnahme in Einsteckrichtung verschiebbar gelagert ist. Vielmehr kann die gesamte Aufnahme mit der darin gehaltenen Gewindeplatte in Einsteckrichtung relativ zur Deckplatte bewegt werden. Dadurch ist eine bessere Fixierung der Gewindeplatte in der Aufnahme möglich. Durch die Federelemente wird die Aufnahme und somit die Gewindeplatte vorzugsweise von der Deckplatte weg gedrängt, so dass die Gewindeplatte in der Vormontageposition nicht an den Schlitzflanken anliegt und somit entlang des Längsschlitzes verschoben und positioniert werden kann.

Die Federlaschen erstrecken sich beispielsweise bogenförmig zwischen dem Halteelement und der Deckplatte, wobei jeweils ein mit dem Halteelement in Verbindung stehender Abschnitt im Wesentlichen in Einsteckrichtung verläuft und ein mit der Deckplatte in Verbindung stehender Abschnitt zur Einsteckrichtung geneigt ist, insbesondere im Wesentlichen parallel zur Ebene der Deckplatte verläuft.

Die Federlaschen können fest mit der Deckplatte und der Aufnahme verbunden sein. In einer bevorzugten Ausführungsform sind die Federelemente aber an der Deckplatte verschiebbar zur Deckplatte gelagert. Die Federkraft und der Federweg werden nicht allein durch die Federlaschen bereitgestellt, sondern die Federlaschen können sich bei einer Bewegung der Aufnahme auf die Deckplatte zu oder von dieser weg relativ zur Deckplatte bewegen. Dadurch wird die Federwirkung verbessert und der Federweg vergrößert.

Beispielsweise ist an der Deckplatte jeweils eine Führung für ein Federelement vorgesehen, in der das Federelement, insbesondere verschiebbar, gelagert ist. Beispielsweise kann das Federelement in die Führung eintauchen.

Um zu verhindern, dass die Federelemente aus den Aufnahmen herausrutschen, können geeignete Fixierungsmittel vorgesehen sein. Beispielsweise weisen die Federelemente jeweils ein Rastelement auf, mit dem die Federelemente jeweils an der Deckplatte verrastet sind. Die Rastelemente erleichtern zudem die Montage der Federelemente an der Deckplatte. Diese müssen lediglich soweit in die Führung eingeschoben werden, bis die Rastelemente an der Deckplatte verrasten. Vorzugsweise entspricht die Position, in der die Federelemente verrastet sind, einer Grundposition, von der aus durch Einfedern der Federelemente die Aufnahme auf die Deckplatte zu bewegt werden kann.

Vorzugsweise sind die Federelemente bezüglich einer in Einsteckrichtung verlaufenden Achse in Umfangsrichtung gleichmäßig verteilt angeordnet, so dass die resultierende Federkraft in Richtung der Achse und insbesondere konzentrisch zur Achse wirkt, so dass ein Kippen der Aufnahme bzw. der Gewindeplatte verhindert ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Explosionsansicht einer ersten Ausführungsform einer erfindungsgemäßen Befestigungsbaugruppe;
- Fig. 2a: eine perspektivische Ansicht der Befestigungsbaugruppe aus Fig. 1;
- Fig. 2b: eine Schnittansicht durch die Befestigungsbaugruppe aus Fig. 2a
- Fig. 2c: eine Draufsicht auf die Befestigungsbaugruppe aus Fig. 2a;
- Fig. 3a: eine erste perspektivische Ansicht der Befestigungsvorrichtung der Befestigungsbaugruppe aus Fig. 2a;
- Fig. 3b: eine zweite perspektivische Ansicht der Befestigungsvorrichtung der Befestigungsbaugruppe aus Fig. 2a;
- Fig. 4a: eine Schnittansicht durch die Befestigungsvorrichtung aus Fig. 3a und Fig. 3b;
- Fig. 4b: eine Draufsicht auf die Befestigungsvorrichtung aus Fig. 3a und Fig. 3b;
- Fig. 4c: eine zweite Schnittansicht durch die Befestigungsvorrichtung aus Fig. 3a und Fig. 3b;
- Fig. 4d: eine Ansicht der Unterseite der Befestigungsvorrichtung aus Fig. 3a und Fig. 3b;
- Fig. 5a: eine erste perspektivische Ansicht der Montage einer Gewindeplatte in der Befestigungsvorrichtung aus Fig. 3a und Fig. 3b;
- Fig. 5b: eine zweite perspektivische Ansicht der Montage einer Gewindeplatte in der Befestigungsvorrichtung aus Fig. 3a und Fig. 3b;
- Fig. 6a: eine erste perspektivische Ansicht der Befestigungsvorrichtung aus Fig. 3a und Fig. 3b mit einer Gewindeplatte;
- Fig. 6b: eine zweite perspektivische Ansicht der Befestigungsvorrichtung aus Fig. 3a und Fig. 3b mit einer Gewindeplatte;
- Fig. 7a: eine Draufsicht auf die Befestigungsvorrichtung aus Fig. 6a und Fig. 6b;
- Fig. 7b: eine Schnittansicht durch die Befestigungsvorrichtung aus Fig. 6a und Fig. 6b;
- Fig. 8: eine Draufsicht auf eine Befestigungsbaugruppe mit der Befestigungsvorrichtung aus Fig. 6a und Fig. 6b;
- Fig. 9: Eine Explosionsansicht einer ersten Ausführungsform einer erfindungsgemäßen Befestigungsbaugruppe;
- Fig. 10a: eine perspektivische Ansicht der Befestigungsbaugruppe aus Fig. 9;
- Fig. 10b: eine Schnittansicht durch die Befestigungsbaugruppe aus Fig. 10a
- Fig. 10c: eine Draufsicht auf die Befestigungsbaugruppe aus Fig. 10a;
- Fig. 11a: eine erste perspektivische Ansicht des Halteelements der Befestigungsvorrichtung der Befestigungsbaugruppe aus Fig. 10a;
- Fig. 11b: eine zweite perspektivische Ansicht des Halteelements aus Fig. 11a;
- Fig. 12a: eine Schnittansicht durch das Haltelement aus Fig. 11a und Fig. 11b;
- Fig. 12b: eine zweite Schnittansicht durch das Haltelement aus Fig. 11a und Fig. 11b;
- Fig. 12c: eine Draufsicht auf das Haltelement aus Fig. 11a und Fig. 11b;
- Fig. 13a: eine erste Explosionsansicht der Befestigungsvorrichtung der Befestigungsbaugruppe aus Fig.10a;
- Fig. 13b: eine zweite Explosionsansicht der Befestigungsvorrichtung der Befestigungsbaugruppe aus Fig.10a;
- Fig. 14a: eine erste perspektivische Ansicht der Befestigungsvorrichtung aus Fig.13a und Fig. 13b;
- Fig. 14b: eine zweite perspektivische Ansicht der Befestigungsvorrichtung aus Fig. 13a und Fig. 13b;
- Fig. 15a: eine Draufsicht auf die Befestigungsvorrichtung aus Fig. 14a und Fig. 14b; und
- Fig. 15b: eine Schnittansicht durch die Befestigungsvorrichtung aus Fig. 14a und Fig. 14b.

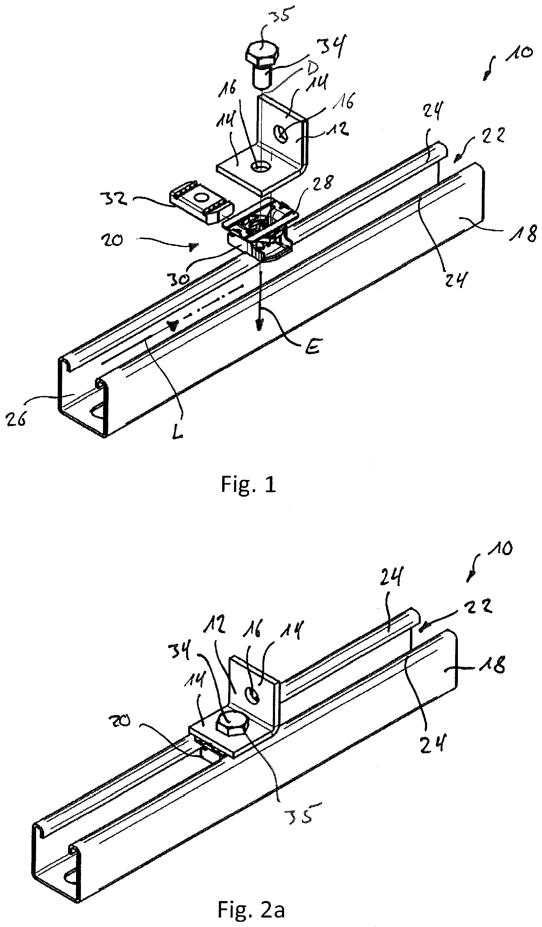

Die Figuren 1, 2a bis 3c sowie 8 zeigen eine Befestigungsbaugruppe 10 zur Befestigung eines Anbauteils 12. Das Anbauteil 12 ist hier ein Winkelblech mit zwei rechtwinklig zueinander stehenden Schenkeln 14 mit jeweils einer Bohrung 16. Das Anbauteil 12 kann auch eine andere Form aufweisen. Des Weiteren kann das Winkelblech lediglich ein Adapter sein, um ein Anbauteil 12 an der Profilschiene 18 zu befestigen.

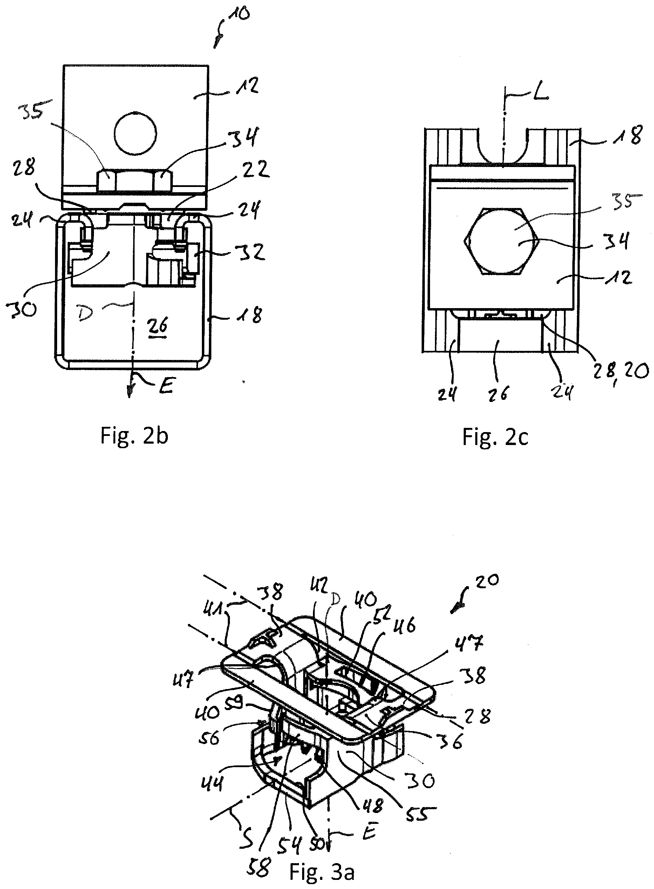

Die in den Figuren 3a bis 7b gezeigte Befestigungsbaugruppe 10 weist eine Profilschiene 18 sowie eine Befestigungsvorrichtung 20 auf. Die Profilschiene 18 hat einen im Wesentlichen C-förmigen Querschnitt und weist einen Längsschlitz 22 auf, der von zwei im Wesentlichen parallelen Schlitzflanken 24 begrenzt ist. Hinter den Schlitzflanken 24 ist ein Aufnahmeraum 26 vorgesehen.

Die in den Figuren 2 bis 8 gezeigte Befestigungsvorrichtung 20 weist eine Deckplatte 28, einen Haltekäfig 30 für eine Gewindeplatte 32, eine Gewindeplatte 32 sowie eine Gewindestange 34 auf.

Mit der Befestigungsvorrichtung 20 kann die Gewindeplatte 32 in den Längsschlitz 22 eingeführt und in diesem um eine Drehachse D in eine Vormontageposition gedreht werden, in der die Gewindeplatte 32 die Schlitzflanken 24 hintergreift. Anschließend kann die Gewindeplatte 32 durch die Gewindestange 34 gegen das Anbauteil 12 in eine Endmontageposition gezogen werden, in der die Schlitzflanken 24 zwischen dem Anbauteil 12 und der Gewindeplatte 32 geklemmt sind, wodurch das Anbauteil 12 an der Profilschiene 18 fixiert ist.

Die Deckplatte 28 ist im Wesentlichen rechtwinklig (alternativ aber auch polygon oder oval) ausgebildet und weist eine Grundplatte 36 auf, die aus zwei parallelen Stegen 38 gebildet ist, sowie zwei Seitenplatten 40, die an entgegengesetzten Rändern der Grundplatte 36 um eine Schwenkachse 41 schwenkbar gelagert sind. Beispielsweise ist das Gelenk zwischen der Grundplatte 36 und den Seitenplatten 40 jeweils durch ein Filmscharnier gebildet. Die Deckplatte 28 weist des Weiteren eine Öffnung 42 für die Gewindestange 34 auf.

Der Haltekäfig 30 erstreckt sich in einer Einsteckrichtung E im Wesentlichen senkrecht von der Deckplatte 28 weg und weist einen im Wesentlichen parallel zur Ebene der Deckplatte 28 verlaufende Aufnahme 44 für die Gewindeplatte 32 auf, in der die Gewindeplatte 32 im Wesentlichen parallel zur Deckplatte 28 gehalten werden kann. Die Aufnahme 44 erstreckt sich durch den Haltekäfig 30 hindurch, so dass die Gewindeplatte 32 in eine quer zur Einsteckrichtung E verlaufenden Einschubrichtung S in die Aufnahme 44 eingeschoben werden kann.

Durch die Deckplatte 28 sowie den Haltekäfig 30 erstreckt sich eine in Einsteckrichtung E verlaufende Durchtrittsöffnung 46 für die Gewindestange 34.

Die Aufnahme 44 wird an einer der Deckplatte 28 zugewandten Oberseite 48 und an einer der Deckseite abgewandten Unterseite 50 jeweils von einem Rahmen 52, 54 begrenzt. Die Höhe der Aufnahme 44 entspricht im Wesentlichen der Höhe der Gewindeplatte 32, so dass eine eingeschobene Gewindeplatte 32 in Einsteckrichtung E kein oder nur ein geringes Spiel aufweist. Die Rahmen 52, 54 sind durch zwei bezüglich der Durchtrittsöffnung 46 diametral gegenüberliegende Stege 55 verbunden, die die seitliche Begrenzung der Aufnahme 44 bilden.

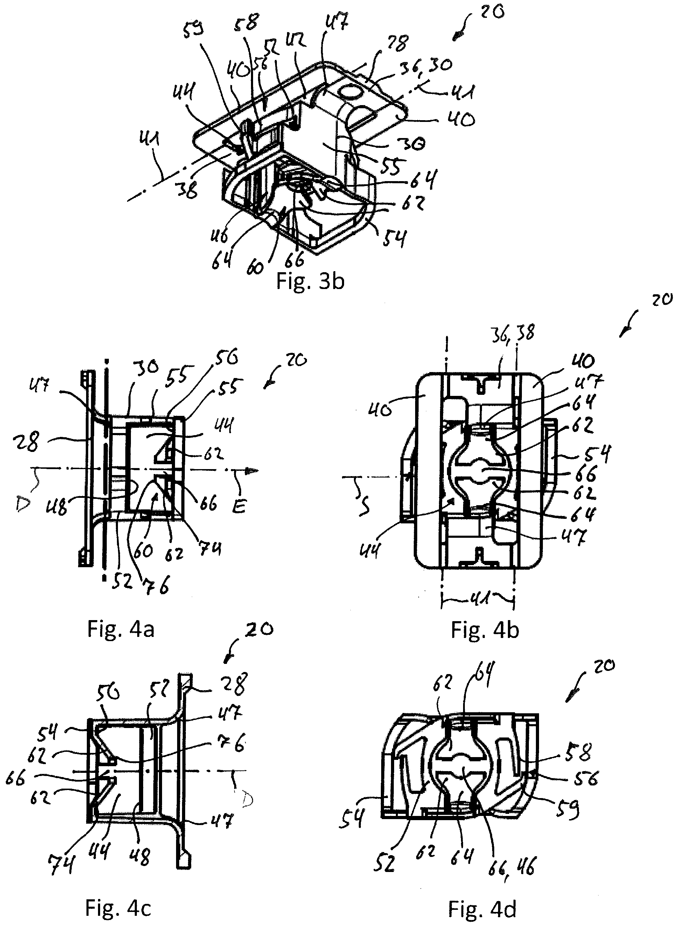

Wie in den Figuren 3a, 3b und 4d zu sehen ist, sind am oberen Rahmen 52 des Weiteren außenseitig zwei Federanordnungen 56 vorgesehen, die bezüglich der Drehachse D diametral gegenüberliegend angeordnet sind und jeweils zwei bezüglich der Drehachse D 46 radial federnde Federlaschen 58, 59 aufweisen. Die Federlaschen 58, 59 erstrecken sich jeweils bezüglich der Drehachse D nach außen weg und sind in Umfangsrichtung bezüglich der Drehachse D gekrümmt. Des Weiteren erstrecken sich die Federlaschen 58, 59 einer Federanordnung 56 bezüglich einer Umfangsrichtung um die Drehachse D in entgegengesetzte Richtungen und aufeinander zu.

Wie insbesondere in Figur 4d zu sehen ist, überlappen sich die Federlaschen 58, 59 einer Federanordnung 56 jeweils in radialer Richtung bezüglich der Drehachse D und weisen unterschiedliche Krümmungen auf.

Am unteren Rahmen 54 ist des Weiteren eine konzentrisch zur Drehachse D angeordnete und in die Aufnahme 44 ragende Halteeinrichtung 60 für die Gewindeplatte 32 vorgesehen. Wie in den Figuren 4a und 4c zu sehen ist, ist die Halteeinrichtung 60 mit einem ersten Ende 74 am Rahmen 54 und somit am Haltekäfig 30 befestigt und erstreckt sich mit einem zweiten, freien Ende in der Art eines Dorns 76 entgegengesetzt der Einsteckrichtung E in die Aufnahme 44.

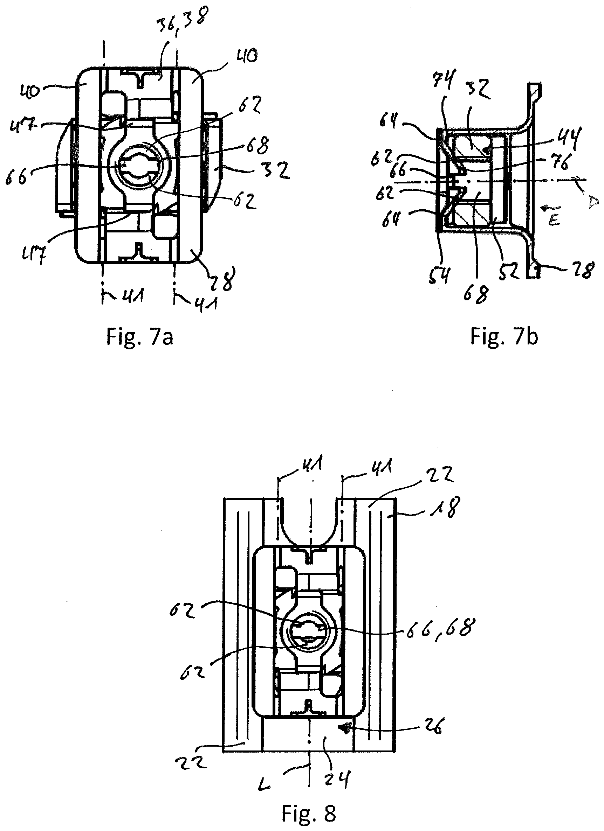

Die Halteeinrichtung 60 erstreckt sich in eine Bohrung 68 der Gewindeplatte 32 und fixiert so die Gewindeplatte 32 in der Aufnahme 44. Wie in Figur 7b zu sehen ist, ragt das freie Ende 76 in die Bohrung 68 und liegt am Bohrungsdurchmesser an, so dass die Gewindeplatte 32 spielfrei gehalten ist, wobei die Bohrung 68 zur Drehachse D zentriert ist.

Wie in Figur 7b des Weiteren zu sehen ist, nimmt der Umkreisdurchmesser der Halteeinrichtung 60 vom freien Ende 76 weg zu, so dass sich die Halteeinrichtung 60 zu ihrem freien Ende hin verjüngt, wodurch sich die Halteeinrichtung 60 bei Bohrungen 68 mit verschiedenen Durchmessern unterschiedlich weit in die Bohrung 68 erstrecken und jeweils am unteren Rand der Bohrung anliegen kann.

Wie insbesondere in den Figuren 3b und 4d zu sehen ist, weist die Halteeinrichtung 60 zwei, in Umfangsrichtung bezüglich der Durchtrittsöffnung 46 gleichmäßig verteilt angeordnete Halteelemente 62 auf. Jedes der Halteelemente 62 ist jeweils über eine Federlasche 64 federnd mit dem Rahmen 54 verbunden. Genau genommen federn die Halteelemente 62 im Wesentlichen um eine Kreisbahn, deren Mittelpunkt jeweils der Anbindungspunkt der Federlaschen am Haltekäfig 30 ist. Der Abstand der Außenwandung der Halteelemente 62 von der Drehachse D nimmt in Einsteckrichtung E zu. Die Umhüllende der Halteelemente 62 weist im Wesentlichen eine konusförmige Oberfläche auf.

Des Weiteren weist die Halteeinrichtung 60 eine in Einsteckrichtung E verlaufende, konzentrisch zur Durchtrittsöffnung 46 angeordnete Öffnung 66 auf. Da die Halteelemente 62 federnd gelagert sind, können diese auch in radialer Richtung bezüglich der Durchtrittsöffnung 46 federnd nachgeben, so dass die Öffnung 66 senkrecht zur Einsteckrichtung E, also bezüglich der Durchtrittsöffnung 46 in radialer Richtung, elastisch aufweitbar ist.

Wie in den Figuren 3a und 3b zu sehen ist, ist der Haltekäfig 30 über als Federlaschen ausgebildete Federelemente 47 mit der Deckplatte 28 verbunden, so dass der Haltekäfig 30 in Einsteckrichtung E federnd mit der Deckplatte 28 gekoppelt ist. Die Federlaschen erstrecken sich bogenförmig zwischen der Deckplatte 28 und dem Haltekäfig 30, wobei ein an dem Haltekäfig 30 vorgesehener Abschnitt im Wesentlichen in Einsteckrichtung E verläuft und ein an der Deckplatte 28 vorgesehener Abschnitt im Wesentlichen in der Ebene der Deckplatte 28 verläuft. Durch die Federelemente 47 ist die Gewindeplatte 32 in Einsteckrichtung E relativ zur Deckplatte 28 elastisch verschiebbar.

Die Gewindestange 34 weist ein zum Innengewinde der Gewindeplatte 32 korrespondierendes Außengewinde auf, mit dem sich die als Schraube ausgebildete Gewindestange 34 in die Bohrung der Gewindeplatte 32 erstreckt. Die Gewindestange 34 stützt sich des Weiteren mit einem Kopf 35 am Anbauteil 12 ab.

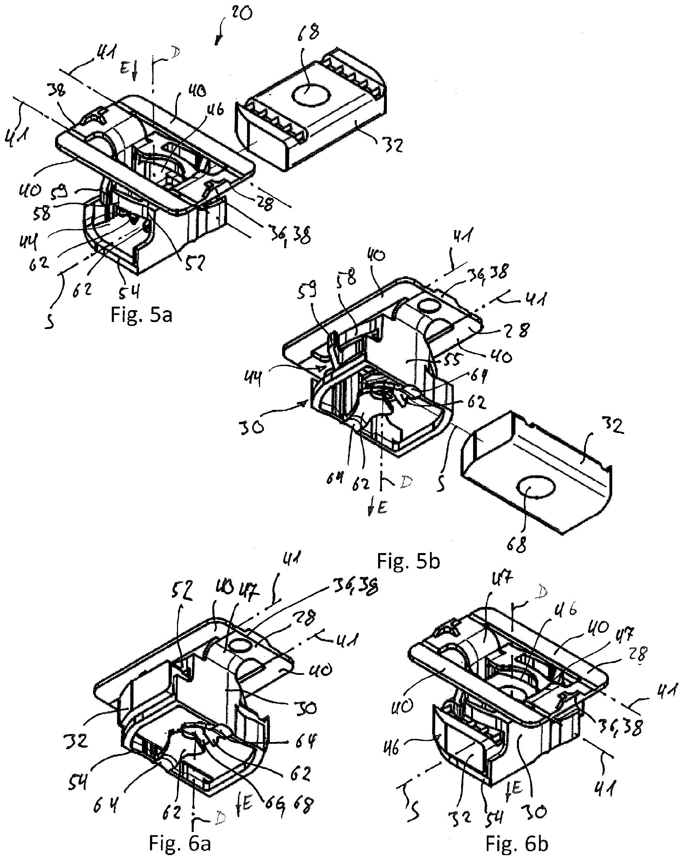

Zur Befestigung des Anbauteils 12 an der Profilschiene 18 wird zunächst eine Gewindeplatte 32 in Einschubrichtung S in die Aufnahme 44 eigeschoben (Figuren 5a und 5b). Die Gewindeplatte 32 ist im Wesentlichen rechteckig ausgebildet, wobei die Breite der Gewindeplatte 32 kleiner ist als der Abstand der beiden Schlitzflanken 24 und die Länge der Gewindeplatte 32 größer ist als der Abstand der beiden Schlitzflanken 24 und im Wesentlichen der Breite des Aufnahmeraums 26 entspricht. Die Gewindeplatte 32 hat des Weiteren eine Bohrung 68 mit einem Innengewinde.

Die Halteelemente 62 können in Einsteckrichtung E so weit federnd nachgeben, so dass diese das Einschieben der Gewindeplatte 32 nicht oder nur geringfügig behindern. Insbesondere können diese vollständig aus der Aufnahme 44 herausfedern. Sobald die Gewindeplatte 32 so weit in die Aufnahme 44 eingeschoben ist, dass die Bohrung 68 konzentrisch zur Durchtrittsöffnung 46 liegt, federn die Halteelemente 62 in die Bohrung 68. Die Halteelemente 62 federn so weit in die Bohrung 68 ein, bis die radiale Außenseite der Halteelemente 62 jeweils am unteren Rand des Bohrungsdurchmessers der Bohrung 68 anliegt (Figuren 6a und 6b). Da der Querschnitt der Halteeinrichtung 62 am ersten Ende 74 größer ist als der Bohrungsdurchmesser der Bohrung 68 und der Querschnitt der Halteeinrichtung 60 am zweiten Ende 76 kleiner ist als der Durchmesser der Bohrung 68, ist die Gewindeplatte 32 in der Aufnahme 44 so zentriert, dass die Bohrung 68 konzentrisch zur Durchtrittsöffnung 46 angeordnet ist.

Die Gewindestange 34 kann anschließend durch die Durchtrittsöffnung 46 in die die Bohrung 68 der Gewindeplatte 32 eingeführt werden. Die Gewindestange kann dabei vor oder nach dem Einsetzen der Befestigungsvorrichtung 20 in die Profilschiene 18 eingeschoben werden.

Da die Halteelemente 62 federnd gelagert sind, kann die Gewindestange 34 das freie Ende 76 bzw. die Halteelemente 62 aus der Bohrung 68 herausdrängen. Insbesondere kann sich die Gewindestange 34 zwischen den aus der Bohrung 68 herausgedrängten Halteelemente 62 durch die Öffnung 66 erstrecken. Wird die Gewindestange 34 aus der Bohrung 68 herausgedreht, können die Halteelemente 62 wieder in die Bohrung 68 einfedern und die Gewindeplatte 32 halten.

Nach dem Einsetzen der Gewindeplatte 32 in die Aufnahme 44 wird die Befestigungsvorrichtung 20 mit der Gewindeplatte 32 so ausgerichtet, dass die Längsrichtung der Gewindeplatte 32 im Wesentlichen der Längsrichtung L des Längsschlitzes 22 entspricht. Die Befestigungsvorrichtung 20 wird so weit in Einsteckrichtung E in den Längsschlitz 22 in eine Zwischenmontageposition eingeschoben, bis die Deckplatte 28 an den Schlitzflanken 24 aufliegt und sich die Gewindeplatte 32 in Einsteckrichtung E hinter den Schlitzflanken befindet. Die Breite des Haltekäfig 30 sowie die Breite der Gewindeplatte 32 sind kleiner als die Breite des Längsschlitzes 22, so dass der Haltekäfig 30 mit der Gewindeplatte 32 in den Längsschlitz 22 eingeschoben werden kann.

Anschließend wird die Befestigungsvorrichtung 20 in Drehrichtung D in eine Vormontageposition gedreht, in der die Gewindeplatte 32 die Schlitzflanken 24 hintergreift. Vorzugsweise wird die Befestigungsvorrichtung 20 um ca. 90° gedreht. Wie in Figur 8 zu sehen ist, verlaufen die Schwenkachsen 41 zwischen der Grundplatte 38 und den Seitenplatten 40 in Längsrichtung L, wobei sich die Schwenkachsen 41 in Einsteckrichtung E über dem Längsschlitz 22 befinden.

In dieser Vormontageposition sowie in der vorangehend beschriebenen Zwischenmontageposition liegen die Federanordnungen 56 an den einander zugewandten Rändern der Schlitzflanken 24 an und zentrieren die Befestigungsvorrichtung 20 im Längsschlitz 22 und halten diese spielfrei, so dass die Befestigungsvorrichtung 20 nicht aus dem Längsschlitz 22 fallen kann. Da die Federanordnungen 56 jeweils zwei Federlaschen 58, 59 aufweisen, ist die Befestigungsvorrichtung 20 zuverlässig, auch bei einer Drehung entgegen der Drehrichtung D, im Längsschlitz 22 zentriert und durch Klemmung gehalten.

An der Deckplatte 28, dem Haltekäfig 30 und/oder an der Gewindeplatte 32 können Anschläge vorgesehen sein, die ein Drehen der Befestigungsvorrichtung 20 in Drehrichtung D über die Vormontageposition hinaus verhindern. Beispielsweise sind die Anschläge an den Federlaschen 58, 59 vorgesehen.

Abschließend wird die Gewindeplatte 32 durch die Gewindestange 34 entgegen der Einsteckrichtung E gegen das Anbauteil 12 gezogen, um die Schlitzflanken 24 zwischen dem Anbauteil 12 und der Gewindeplatte 32 zu verklemmen. Da der Haltekäfig 30 federnd mit der Deckplatte 28 verbunden ist, können die Deckplatte 28 und der Haltekäfig 30 aufeinander zu bewegt werden.

Die Deckplatte 28 wird dabei vom Anbauteil 12 in den Längsschlitz 22 gedrängt, wobei die Seitenplatten 40 durch die Schlitzflanken 24 um die Schwenkachsen 41 umgefaltet werden, so dass die Deckplatte 28 in den Längsschlitz 22 eintauchen kann. Die Seitenplatten 40 gleiten dabei auf den Schlitzflanken 24, die nach oben, also auf der dem Aufnahmeraum 26 abgewandten Seite, abgerundete Kanten aufweisen.

In der Endmontageposition ist die Deckplatte 28 in den Längsschlitz 22 eingetaucht und das Anbauteil 12 liegt unmittelbar auf den Schlitzflanken 24 der Profilschiene 18 auf. Die Schlitzflanken 24 sind also zwischen der Gewindeplatte 32 und dem Anbauteil 12 geklemmt. Die Deckplatte 28 befindet sich nicht im Kraftfluss zwischen der Gewindeplatte 32 bzw. dem Anbauteil 12 und der Profilschiene 18.

Beispielsweise besteht die Befestigungsvorrichtung 20 aus Kunststoff und die Gewindeplatte 32 sowie die Profilschiene 18 sind aus Metall hergestellt. Bei Verwendung der vorstehend beschriebenen Befestigungsvorrichtung 20 befindet sich nach dem Anziehen der Gewindestange in der endgültigen Montagestellung unter Last somit kein Kunststoff im Kraftfluss, wodurch die Zuverlässigkeit der Verbindung des Anbauteils 12 an der Profilschiene 18 erhöht werden kann.

Durch die Halte- und Zentriervorrichtung 60 wird die Gewindeplatte 32 im Haltekäfig 30 fixiert, so dass diese nicht während der Montage aus der Aufnahme 44 fallen kann. Da die Halteelemente 62 federnd ausgebildet sind, können diese auch unterschiedliche Dicken der Gewindeplatte 32 ausgleichen. Insbesondere kann die Höhe der Aufnahme 44 in Einsteckrichtung E auch größer sein als die Dicke der Gewindeplatte 32, wobei die Halteeinrichtung 60 die Gewindeplatte 32 federbeaufschlagt gegen die Oberseite oder die Unterseite der Aufnahme 44 drängt.

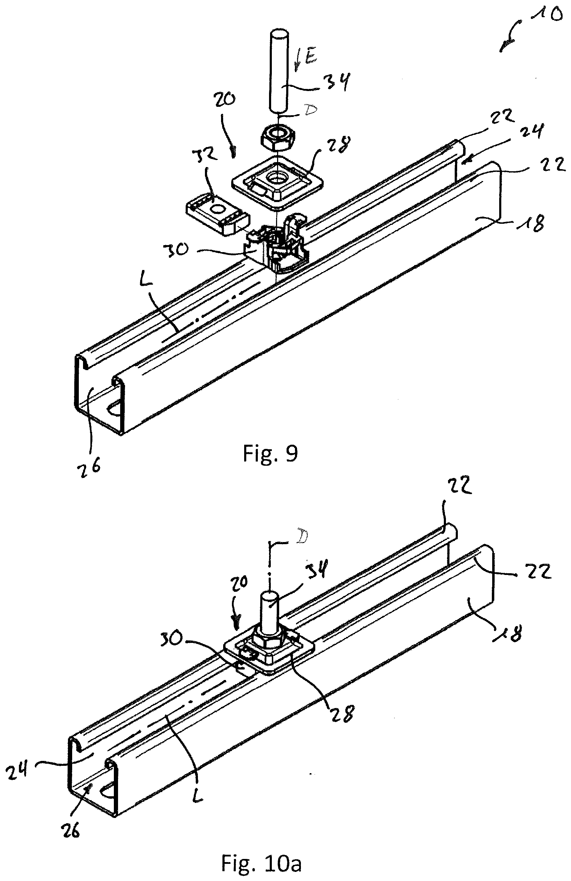

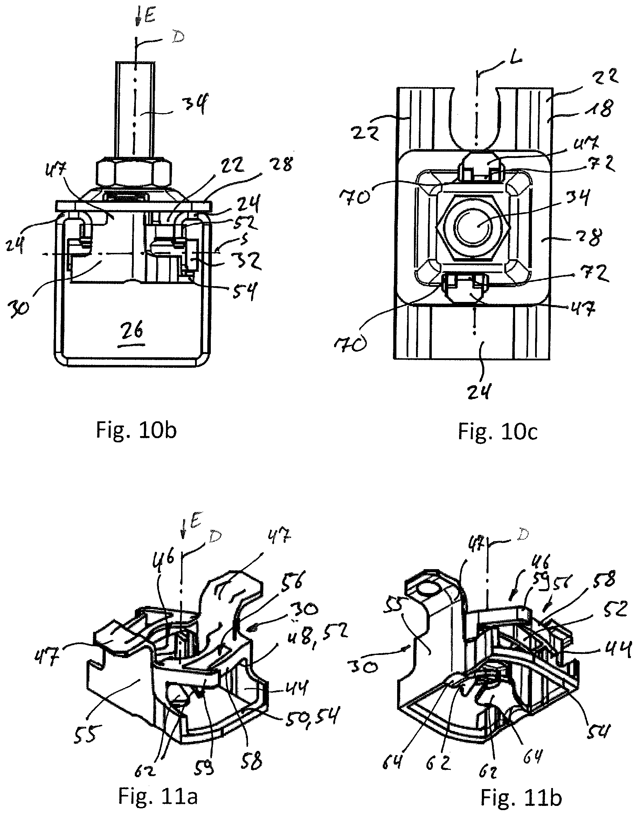

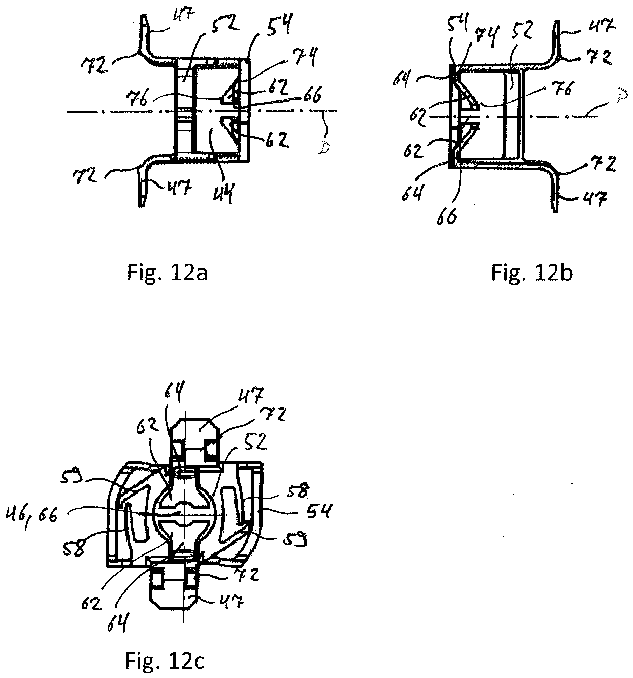

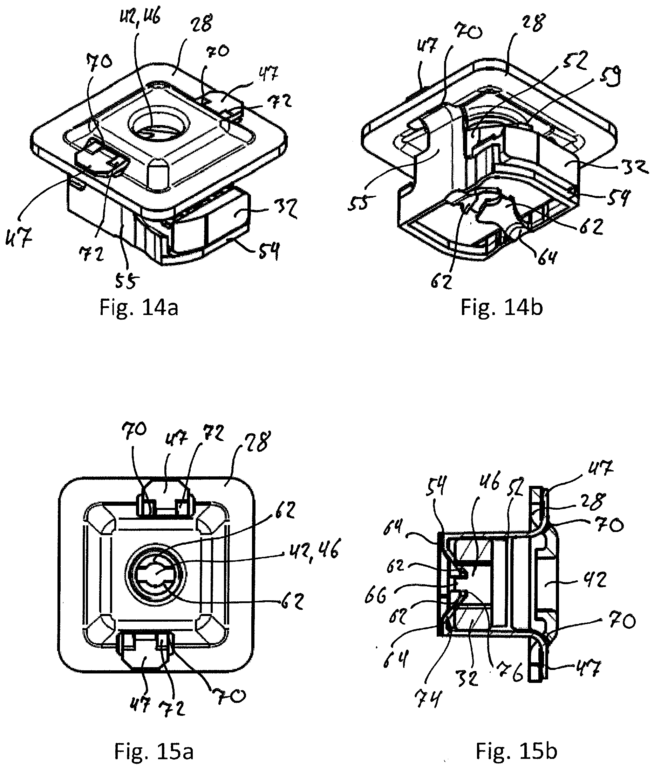

Eine zweite Ausführungsform einer Befestigungsbaugruppe 10 bzw. einer Befestigungsvorrichtung 20 ist in den Figuren 9 bis 15b gezeigt.

Der grundsätzliche Aufbau sowie die Funktionsweise entsprechen der vorstehend beschriebenen Befestigungsbaugruppe 10.

Anders als im vorgehend beschriebenen Ausführungsbeispiel ist aber die Deckplatte 28 nicht zwischen einer Vormontagestellung und einer Endmontagestellung verformbar. Die Deckplatte 28 ist starr ausgebildet und kann nicht zwischen den Schlitzflanken 24 eintauchen.

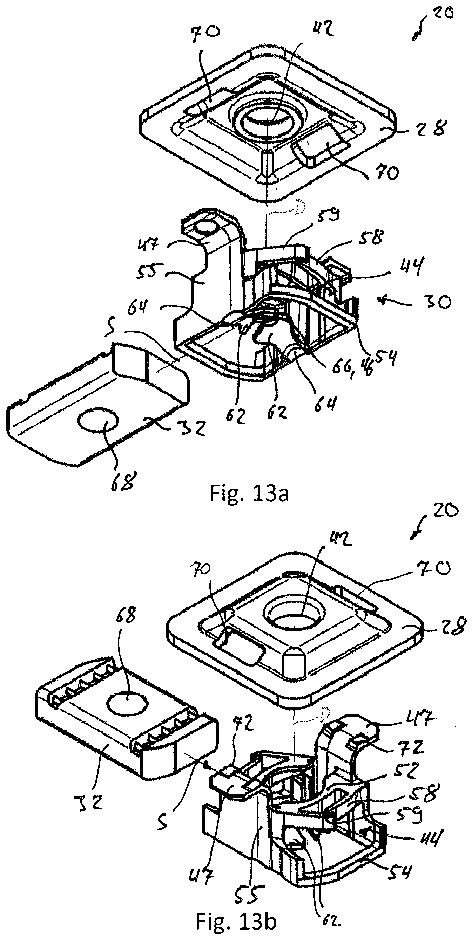

Des Weiteren sind die Federelemente 47 nicht starr an der Deckplatte 28 befestigt, sondern verschiebbar an dieser gelagert. Wie insbesondere in den Figuren 13a und 13b zu sehen ist, weist die Deckplatte 28 zwei bezüglich der Durchtrittsöffnung 46 diametral gegenüberliegende Aufnahmen 70 auf, die jeweils durch eine sich durch die Deckplatte 28 erstreckende Aussparung gebildet sind.

Die Federelemente 47 sind bogenförmig ausgebildet und erstrecken sich mit einem parallel zur Ebene der Deckplatte 28 verlaufenden Abschnitt in die Aufnahmen 70 und sind in diesen verschiebbar gelagert. Wie insbesondere in Figur 13b zu sehen ist, weisen die Federelemente jeweils ein Rastelement 72 auf, das am Rand der Führung 70 verrastet und somit verhindert, dass die Federelemente 47 aus den Aufnahmen 70 herausrutschen können.

Die maximale Entfernung des Haltekäfigs 30 von der Deckplatte 28 ist durch die Position der Rastelemente festgelegt. Der Haltekäfig 30 kann so weit von der Deckplatte 28 in Einsteckrichtung weg bewegt werden, bis die Rastelemente 72 am Rand der Führung 70 anliegen. Vorzugsweise sind die Federelemente 47 so ausgebildet, dass der Haltekäfig 30 von der Deckplatte 28 weg, also die Rastelemente 72 gegen den Rand der Führung 70, gedrängt werden. Entgegen der Einsteckrichtung kann der Haltekäfig 30 auf die Deckplatte 28 zu bewegt werden, wobei die Federelemente 47 nachgeben können und die Federelemente 47 in die aufnahmen 70 eintauchen, also relativ zur Deckplatte 28 verschoben werden können.

Die Haltevorrichtung ist also mehrteilig aufgebaut, nämlich aus einer Deckplatte 28 einem separaten Haltekäfig 30 sowie einer Gewindeplatte 32 und einer Gewindestange 34. Die Deckplatte 28 und der Haltekäfig 30 können so beispielsweise aus verschiedenen Materialien hergestellt werden. Beispielsweise kann die Deckplatte 28 aus einem relativ steifen bzw. druckstabilen Material hergestellt werden. Der Haltekäfig 30 muss dagegen nur geringe Kräfte aufnehmen, so dass diese aus einem relativ leichten und flexiblen Material hergestellt werden kann. Insbesondere können die Deckplatte 28 und der Haltekäfig 30 aber auch aus dem gleichen Material hergestellt werden. Die getrennte Herstellung der Deckplatte 28 und des Haltekäfig 30 bietet Vorteile, da diese einfacher herzustellen sind, beispielsweise in einem Spritzgussverfahren.

Die Erfindung, wie in den Ansprüchen definiert, ist nicht auf eine der vorbeschriebenen Ausführungsformen beschränkt, sondern in vielfältiger Weise abwandelbar.

### Bezugszeichenliste

- 10: Befestigungsbaugruppe
- 12: Anbauteil
- 14: Schenkel des Anbauteils
- 16: Bohrung des Anbauteils
- 18: Profilschiene
- 20: Befestigungsvorrichtung
- 22: Längsschlitz
- 24: Schlitzflanken
- 26: Aufnahmeraum
- 28: Deckplatte
- 30: Haltekäfig
- 32: Gewindeplatte
- 34: Gewindestange
- 35: Kopf der Gewindestange
- 36: Grundplatte
- 38: Stege
- 40: Seitenplatten
- 41: Schwenkachse
- 42: Öffnung in Deckplatte
- 44: Aufnahme
- 46: Durchtrittsöffnung
- 47: Federelement
- 48: Oberseite der Aufnahme

- 50: Unterseite der Aufnahme
- 52: Rahmen
- 54: Rahmen
- 55: Steg
- 56: Federanordnung
- 58: Federlasche
- 59: Federlasche
- 60: Halteeinrichtung
- 62: Halte- und Zentrierelement
- 64: Federlasche
- 66: Öffnung
- 68: Bohrung
- 70: Aufnahme
- 72: Rastelement
- 74: erstes Ende der Halteeinrichtung
- 76: freies Ende der Halteeinrichtung/Dorn

- E: Einsteckrichtung
- L: Längsrichtung
- S: Einschubrichtung

## Patentansprüche

1. Befestigungsvorrichtung (20) zur Befestigung einer Last an einer Profilschiene (18), die einen im Wesentlichen C-förmigen Querschnitt und einen Längsschlitz (22) aufweist, wobei die Befestigungsvorrichtung eine Deckplatte (28) zur Auflage auf der Profilschiene (18),
eine Gewindeplatte (32), die eine Gewindebohrung (68) aufweist und eine Länge größer als die Breite des Längsschlitzes (22) und eine Breite kleiner als die Breite des Längsschlitzes (22) besitzt,
und einen an der Deckplatte (28) angeordneten Haltekäfig (30) für die Gewindeplatte (32) zum Einstecken in die Profilschiene (18) aufweist, der eine sich durch den Haltekäfig (30) erstreckende Aufnahme (44) aufweist, in der die Gewindeplatte (32) mit Abstand und parallel zur Deckplatte (28) gehalten ist,
wobei
am Haltekäfig (30) eine Halteeinrichtung (60) für die Gewindeplatte (32) vorgesehen ist, wobei die Halteeinrichtung (60) elastisch nachgiebig an dem Haltekäfig angeordnet ist und die Gewindeplatte (32) in einer Einschubrichtung (S) in der Aufnahme (44) gegen Herausfallen sichert, wobei die Einschubrichtung im Wesentlichen in der Längsrichtung der Gewindeplatte (32) verläuft, **dadurch**
**gekennzeichnet, dass** die Halteeinrichtung (60) mit einem freien Ende (76) in den Bohrungsdurchmesser der Gewindebohrung (68) der Gewindeplatte (32) eingreift.

2. Befestigungsvorrichtung nach Anspruch 1, **dadurch gekennzeichnet, dass** die Halteeinrichtung als Dorn ausgebildet ist, der in die Gewindebohrung (68) hineinragt.

3. Befestigungsvorrichtung nach einem der Ansprüche 1 bis 2, **dadurch gekennzeichnet, dass** die Halteeinrichtung (60) oder der Dorn von der der Deckplatte (28) abgewandten Seite her in die Gewindebohrung (68) hineinragt.

4. Befestigungsvorrichtung nach einem der Ansprüche 1 bis 3, **dadurch gekennzeichnet, dass** sich der Umkreisdurchmesser der Halteeinrichtung (60) oder des Dorns zum freien Ende hin verjüngt.

5. Befestigungsvorrichtung nach Anspruch 4, **dadurch gekennzeichnet, dass** der Umkreisdurchmesser des Dorns oder der Halteeinrichtung (60) an seiner größten Stelle größer als der Durchmesser der Gewindebohrung (68) ist.

6. Befestigungsvorrichtung nach einem der vorhergehenden Ansprüche, **dadurch gekennzeichnet, dass** die Halteeinrichtung (60) oder der Dorn zumindest zwei in Umfangsrichtung verteilt angeordnete Halteelemente (62) aufweist, die in die Bohrung (68) der Gewindeplatte (32) ragen.

7. Befestigungsvorrichtung nach Anspruch 6, **dadurch gekennzeichnet, dass** die Halteelemente (62) über Federlaschen (64) am Haltekäfig (30) festgelegt sind.

8. Befestigungsvorrichtung nach einem der vorhergehenden Ansprüche, **dadurch gekennzeichnet, dass** zwischen der Halteeinrichtung (60) und dem Haltekäfig (30) Sollbruchstellen oder Knickstellen vorgesehen sind.

9. Befestigungsvorrichtung nach einem der vorhergehenden Ansprüche, **dadurch gekennzeichnet, dass** die Aufnahme (44) in Einsteckrichtung (E) durch einen Rahmen (54) begrenzt ist, der sich in einer senkrecht zur Einsteckrichtung (E) angeordneten Ebene erstreckt, wobei die Halteeinrichtung (60) auf der Innenseite des Rahmens (54) an diesem angeordnet ist.

10. Befestigungsvorrichtung nach einem der vorhergehenden Ansprüche, **dadurch gekennzeichnet, dass** die Halteeinrichtung (60), die Deckplatte (28) und/oder die Halteeinrichtung (60) ein- oder mehrteilig aus Kunststoff gefertigt sind.

11. Befestigungsvorrichtung nach einem der vorhergehenden Ansprüche, **dadurch gekennzeichnet, dass** die Höhe der Aufnahme (44) in dem Haltekäfig (30) größer ist als die Dicke der Gewindeplatte (32), wobei wenigstens ein Federelement vorgesehen ist, das die Gewindeplatte (32) gegen die Halteeinrichtung (60) drängt.

12. Befestigungsvorrichtung nach einem der vorhergehenden Ansprüche, **dadurch gekennzeichnet, dass** eine Gewindestange (34) oder eine Schraube mit einem zum Innengewinde der Gewindeplatte (32) korrespondierenden Außengewinde vorgesehen ist, die in das Innengewinde der Gewindeplatte (32) eingedreht ist und über die Deckplatte (28) hervorsteht.

13. Befestigungsbaugruppe (10) mit einer Befestigungsvorrichtung nach einem der vorhergehenden Ansprüche und mit einer Profilschiene (18), die einen im Wesentlichen C-förmigen Querschnitt und einen Längsschlitz (22) aufweist, wobei die Länge der Gewindeplatte (32) größer ist als die Breite des Längsschlitzes (22) und die Breite der Gewindeplatte (32) kleiner ist als die Breite des Längsschlitzes (22),
wobei die Befestigungsvorrichtung (20) in einer ersten Orientierung, in der die Aufnahme (44) in Längsrichtung (L) der Profilschiene (18) angeordnet ist, mit dem Haltekäfig (30) in Einsteckrichtung (E) in eine Zwischenmontageposition den Längsschlitz (22) einführbar ist, in der die Deckplatte (28) auf der Profilschiene (18) aufliegt,
wobei die Befestigungsvorrichtung (20) von der Zwischenmontageposition um eine in Einsteckrichtung verlaufende Drehachse in einer Montagerichtung in eine Vormontageposition drehbar ist, in der die Gewindeplatte (32) die Ränder (24) des Längsschlitzes (22) hintergreift, und
wobei die Befestigungsvorrichtung (20) durch ein Spannen der Gewindeplatte (32) entgegen der Einsteckrichtung (E) gegen die Profilschiene (18) von der Vormontageposition in eine Endmontageposition bewegbar ist.

14. Befestigungsbaugruppe nach Anspruch 13, **dadurch gekennzeichnet, dass** an der Deckplatte (28) und/oder am Haltekäfig (30) zumindest ein Drehanschlag vorgesehen ist, der in der Vormontageposition an der Profilschiene (18) anliegt und ein Drehen in Montagerichtung über die Vormontageposition hinaus verhindert.

## Claims

1. Fastening device (20) for fastening a load to a profile rail (18) which has a substantially C-shaped cross-section and a longitudinal slot (22), wherein the fastening device has a cover plate (28) for laying on the profile rail (18), a threaded plate (32) which comprises a threaded bore (68) and has a length greater than the breadth of the longitudinal slot (22) and a breadth smaller than the breadth of the longitudinal slot (22) and a holding cage (30) arranged on the cover plate (28) for the threaded plate (32) for plugging into the profile rail (18), which holding cage has a receptacle (44) extending through the holding cage (30), in which the threaded plate (32) is held at a distance and parallel to the cover plate (28),
wherein a holding device (60) for the threaded plate (32) is provided on the holding cage (30),
wherein the holding device (60) is arranged on the holding cage so as to be elastically yielding and secures the threaded plate (32) in an introduction direction (S) in the receptacle (44) from falling out, wherein the introduction direction runs substantially in the longitudinal direction of the threaded plate (32), **characterised in that** the holding device (60) engages with a free end (76) into the bore diameter of the threaded bore (68) of the threaded plate (32).

2. Fastening device according to claim 1, **characterised in that** the holding device is in the form of a mandrel which protrudes into the threaded bore (68).

3. Fastening device according to any of claims 1 to 2, **characterised in that** the holding device (60) or the mandrel protrudes from the side facing away from the cover plate (28) into the threaded bore (68).

4. Fastening device according to any of claims 1 to 3, **characterised in that** the circular diameter of the holding device (60) or of the mandrel tapers towards the free end.

5. Fastening device according to claim 4, **characterised in that** the circular diameter of the mandrel or the holding device (60) is greater than the diameter of the threaded bore (68) at its largest point.

6. Fastening device according to any of the preceding claims, **characterised in that** the holding device (60) or the mandrel comprises at least two holding elements (62) arranged distributed in circumferential direction, which protrude into the bore (68) of the threaded plate (32).

7. Fastening device according to claim 6, **characterised in that** the holding elements (62) are fixed to the holding cage (30) via spring tabs (64).

8. Fastening device according to any of the preceding claims, **characterised in that** predetermined breaking points or bending points are provided between the holding device (60) and the holding cage (30).

9. Fastening device according to any of the preceding claims, **characterised in that** the receptacle (44) is limited in plug-in direction (E) by a frame (54) which extends in a plane arranged perpendicularly to the plug-in direction (E), wherein the holding device (60) is arranged on this frame (54) on the inner side thereof.

10. Fastening device according to any of the preceding claims, **characterised in that** the holding device (60), the cover plate (28) and/or the holding device (60) are made of plastic in one or several parts.

11. Fastening device according to any of the preceding claims, **characterised in that** the height of the receptacle (44) in the holding cage (30) is greater than the thickness of the threaded plate (32), wherein at least one spring element is provided which pushes the threaded plate (32) against the holding device (60).

12. Fastening device according to any of the preceding claims, **characterised in that** a threaded rod (34) or a screw is provided having an outer threading corresponding to the inner threading of the threaded plate (32), which is screwed into the inner threading of the threaded plate (32) and protrudes beyond the cover plate (28).

13. Fastening assembly (10) having a fastening device according to any of the preceding claims and having a profile rail (18) which has a substantially C-shaped cross-section and a longitudinal slot (22), wherein the length of the threaded plate (32) is greater than the breadth of the longitudinal slot (22) and the breadth of the threaded plate (32) is smaller than the breadth of the longitudinal slot (22),
wherein the fastening device (20) in a first orientation, in which the receptacle (44) is arranged in longitudinal direction (L) of the profile rail (18), can be introduced with the holding cage (30) in plug-in direction (E) into an intermediate mounting position the longitudinal slot (22), in which the cover plate (28) rests on the profile rail (18),
wherein the fastening device (20) can be turned from the intermediate mounting position about a rotational axis running in plug-in direction in a mounting direction into a pre-mounting position, in which the threaded plate (32) grips behind the edges (24) of the longitudinal slot (22), and
wherein the fastening device (20) can be moved from the pre-mounting position into an end-mounting position by tensioning the threaded plate (32) against the plug-in direction (E) against the profile rail (18).

14. Fastening assembly according to claim 13, **characterised in that** on the cover plate (28) and/or on the holding cage (30) is provided at least one turn stop, which in the pre-mounting position rests on the profile rail (18) and prevents a turning in mounting direction beyond the pre-mounting position.

## Revendications

1. Dispositif de fixation (20) pour fixer une charge à un rail profilé (18), qui présente une section transversale sensiblement en forme de C et une fente longitudinale (22), dans lequel le dispositif de fixation présente une plaque de recouvrement (28) pour prendre appui sur le rail profilé (18), une plaque filetée (32) qui présente un trou taraudé (68) et présentant une longueur supérieure à la largeur de la fente longitudinale (22) et une largeur inférieure à la largeur de la fente longitudinale (22), et une cage de retenue (30) agencée sur la plaque de recouvrement (28) pour la plaque filetée (32) pour une insertion dans le rail profilé (18), qui présente un logement (44) qui s'étend à travers la cage de retenue (30), dans lequel la plaque filetée (32) est maintenue à distance et parallèlement à la plaque de recouvrement (28),
dans lequel un dispositif de retenue (60) pour la plaque filetée (32) est prévu sur la cage de retenue (30),
dans lequel le dispositif de retenue (60) est agencé de manière élastiquement flexible sur la cage de retenue et sécurise la plaque filetée (32) dans une direction d'insertion (S) dans le logement (44) contre les chutes, dans lequel la direction d'insertion s'étend essentiellement dans la direction longitudinale de la plaque filetée (32), **caractérisé en ce que** le dispositif de retenue (60) vient en prise avec une extrémité libre (76) dans le diamètre de trou du trou taraudé (68) de la plaque filetée (32).

2. Dispositif de fixation selon la revendication 1, **caractérisé en ce que** le dispositif de retenue est réalisé sous la forme d'une broche qui fait saillie dans le trou taraudé (68).

3. Dispositif de fixation selon l'une quelconque des revendications 1 à 2, **caractérisé en ce que** le dispositif de retenue (60) ou la broche pénètre dans le trou taraudé (68) depuis le côté opposé à la plaque de recouvrement (28).

4. Dispositif de fixation selon l'une quelconque des revendications 1 à 3, caractérisé en ce= que le diamètre circonférentiel du dispositif de retenue (60) ou de la broche diminue vers l'extrémité libre.

5. Dispositif de fixation selon la revendication 4, **caractérisé en ce que** le diamètre circonférentiel de la broche ou du dispositif de retenue (60) à son point le plus grand est supérieur au diamètre du trou taraudé (68).

6. Dispositif de fixation selon l'une quelconque des revendications précédentes, **caractérisé en ce que** le dispositif de retenue (60) ou la broche présente au moins deux éléments de retenue (62) agencés répartis dans la direction périphérique, qui font saillie dans le trou (68) de la plaque filetée (32).

7. Dispositif de fixation selon la revendication 6, **caractérisé en ce que** les éléments de retenue (62) sont fixés à la cage de retenue (30) par l'intermédiaire de pattes élastiques (64).

8. Dispositif de fixation selon l'une quelconque des revendications précédentes, **caractérisé en ce que** des points de rupture ou des points d'inflexion sont prévus entre le dispositif de retenue (60) et la cage de retenue (30).

9. Dispositif de fixation selon l'une quelconque des revendications précédentes, **caractérisé en ce que** le logement (44) est délimité dans la direction d'insertion (E) par un cadre (54) qui s'étend dans un plan agencé perpendiculairement par rapport à la direction d'insertion (E), dans lequel le dispositif de retenue (60) à l'intérieur du cadre (54) est agencé sur celui-ci.

10. Dispositif de fixation selon l'une quelconque des revendications précédentes, **caractérisé en ce que** le dispositif de retenue (60), la plaque de recouvrement (28) et/ou le dispositif de retenue (60) sont réalisés en une ou plusieurs parties en matière plastique.

11. Dispositif de fixation selon l'une quelconque des revendications précédentes, **caractérisé en ce que** la hauteur du logement (44) dans la cage de retenue (30) est supérieure à l'épaisseur de la plaque filetée (32), dans lequel au moins un élément à ressort est prévu, qui pousse la plaque filetée (32) contre le dispositif de retenue (60).

12. Dispositif de fixation selon l'une quelconque des revendications précédentes, **caractérisé en ce qu'**une tige filetée (34) ou une vis est prévue, avec un filetage extérieur correspondant au filetage intérieur de la plaque filetée (32), qui est vissée dans le filetage intérieur de la plaque filetée (32) et fait saillie au-delà de la plaque de recouvrement (28).

13. Module de fixation (10) comprenant un dispositif de fixation selon l'une quelconque des revendications précédentes et avec un rail profilé (18), qui présente une section transversale sensiblement en forme de C et une fente longitudinale (22), dans lequel la longueur de la plaque filetée (32) est supérieure à la largeur de la fente longitudinale (22) et la largeur de la plaque filetée (32) est inférieure à la largeur de la fente longitudinale (22),
dans lequel le dispositif de fixation (20) dans une première orientation, dans laquelle le logement (44) est agencé dans la direction longitudinale (L) du rail profilé (18), peut être inséré avec la cage de retenue (30) dans la direction d'insertion (E) dans une position de montage intermédiaire de la fente longitudinale (22), dans laquelle la plaque de recouvrement (28) repose sur le rail profilé (18),
dans lequel le dispositif de fixation (20) peut être tourné depuis la position de montage intermédiaire autour d'un axe de rotation s'étendant dans la direction d'insertion dans une direction de montage jusque dans une position de pré-montage dans laquelle la plaque filetée (32) vient en prise avec les bords (24) de la fente longitudinale (22), et
dans lequel le dispositif de fixation (20) peut être déplacé de la position de prémontage jusque dans une position de montage finale en contraignant la plaque filetée (32) à l'encontre de la direction d'insertion (E) contre le rail profilé (18).

14. Module de fixation selon la revendication 13, **caractérisé en ce qu'**au moins une butée de rotation est prévue sur la plaque de recouvrement (28) et/ou sur la cage de retenue (30), qui appuie sur le rail profilé (18) dans la position de pré-montage et empêche une rotation dans la direction de montage au-delà de la position de pré-montage .
